(19) Europäisches Patentamt
European Patent Office
Office européen des brevets

(11) **EP 2 429 228 A1**

(12) **EUROPEAN PATENT APPLICATION**
published in accordance with Art. 153(4) EPC

(43) Date of publication:
**14.03.2012 Bulletin 2012/11**

(51) Int Cl.:
*H04W 16/02* (2009.01)   *H04W 16/24* (2009.01)
*H04W 24/10* (2009.01)   *H04W 52/24* (2009.01)

(21) Application number: **10772103.7**

(22) Date of filing: **14.04.2010**

(86) International application number:
**PCT/JP2010/002713**

(87) International publication number:
**WO 2010/128576 (11.11.2010 Gazette 2010/45)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **08.05.2009 JP 2009113642**

(71) Applicant: **NEC Corporation
Tokyo 108-8001 (JP)**

(72) Inventors:
• **WATANABE, Yoshinori
Tokyo 108-8001 (JP)**
• **MATSUNAGA, Yasuhiko
Tokyo 108-8001 (JP)**

(74) Representative: **MacDougall, Alan John Shaw et al
Mathys & Squire LLP
120 Holborn
London
EC1N 2SQ (GB)**

(54) **NETWORK MANAGEMENT SYSTEM, WIRELESS COVERAGE CONTROL METHOD, AND WIRELESS COVERAGE CONTROL PROGRAM**

(57) A network management system includes: wireless link quality information collection means for collecting, from a mobile terminal that is connected to the mobile communication network, wireless link quality information that indicates wireless link quality measured by the mobile terminal, the wireless link quality information containing information about quality of wireless links between the mobile terminal and two or more wireless cells; coverage evaluation means for evaluating the wireless cell coverage on the basis of wireless link quality information calculated for each of the wireless cells using the wireless link quality information collected by the wireless link quality information collection means; and wireless parameter calculation means for calculating an amount of change in changing for a wireless parameter of a wireless base station on the basis of the result of the evaluation provided by the coverage evaluation means.

FIG. 4

## Description

Technical Field

The present invention relates to a network management system, a wireless coverage control method, and a wireless coverage control program which enable control on coverage provided by a wireless cell formed in a mobile communication network.

Background Art

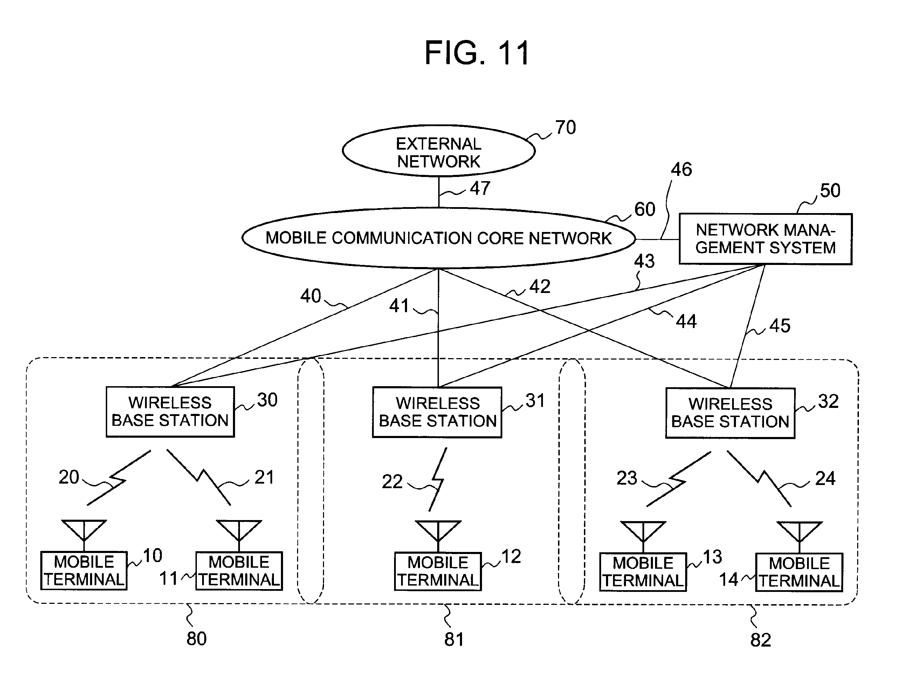

FIG. 11 is a diagram illustrating an example of the configuration of a mobile communication system. The mobile communication system illustrated in FIG. 11 includes wireless base stations 30, 31 and 32 and mobile terminals 10, 11, 12, 13 and 14. The wireless base stations 30, 31 and 32 are connected to a mobile communication core network 60. Each of the mobile terminals 10, 11, 12, 13 and 14 is connected to any of the wireless base stations through a wireless link. In addition, the mobile communication core network 60 is connected to a network management system 50 and an external network 70. In the example illustrated in FIG. 11, wireless cells 80, 81 and 82 that serve as wireless zones are formed around the wireless base stations 30, 31 and 32, respectively. In the wireless cells 80, 81 and 82, the wireless links are formed between the mobile terminals and the mobile base stations 30, 31 and 32. The mobile terminals 10 and 11 are connected to the wireless base station 30 through wireless links 20 and 21 in the wireless cell 80. The mobile terminal 12 is connected to the wireless base station 31 through a wireless link 22 in the wireless cell 81. The mobile terminals 13 and 14 are connected to the wireless base station 32 through wireless links 23 and 24 in the wireless cell 82.

The wireless base stations 30, 31 and 32 are connected to the wireless communication core network 60 through wired links 40, 41 and 42, respectively. The wireless base stations 30, 31 and 32 transmit and receive communication data and control data to and from a switching center and a server device which are not shown but are installed in the mobile communication core network 60, and other wireless base stations. In the mobile communication system illustrated in FIG. 11, the switching center and the server device both not illustrated in FIG. 11, which are installed in the mobile communication core network 60, and the wireless base stations 30, 31, 32 are connected to the network management system 50 through a wired link 43, 44, 45 and 46 and their status are monitored by the network management system 50.

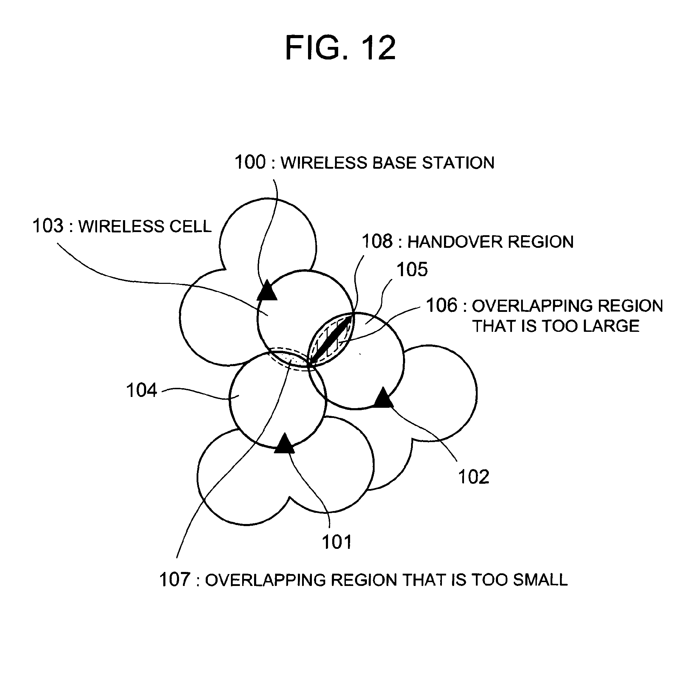

FIG. 12 is a diagram illustrating an example of an arrangement of areas covered by wireless cells. The areas that are covered by the wireless cells means geographical ranges in which wireless communication in the wireless cells is possible. The geographical ranges are called wireless coverage or simply called coverage. In the example illustrated in FIG. 12, three wireless cells are arranged around each of wireless base stations 100 to 102 and two-dimensionally partitioned service areas are provided in such a manner that ranges (or coverage) in which wireless communication in the respective wireless cells is possible overlap each other. Providing the two-dimensionally partitioned service areas means that serviceable areas exist in a continuous manner without disconnection even if mobile terminals move.

When an area in which adjacent wireless cells (wireless cells 103 and 104 in this example) overlap each other is small, like an area 107 illustrated in FIG. 12, the communication quality which is necessary for a mobile terminal to move while making a communication between the wireless cells may not be obtained and unexpected disconnection occurs. It is, therefore, necessary to ensure a region in which the adjacent wireless cells appropriately overlap each other.

The size of the region in which the adjacent wireless cells appropriately overlap each other varies depending on the geographical conditions. For example, when such an overlapping region exists on a main street, it is known that, since a relatively large number of mobile terminals make a communication while moving at high speed between the adjacent wireless cells, the overlapping region needs to be ensured to a large extent.

In contrast, if an area in which adjacent wireless cells (wireless cells 103 and 105 in this example) overlap each other is too large, like an area 106, interference with a radio wave received from one or more of the adjacent wireless cells is great. For this reason, it is necessary to remove such interference and thereby the available capacity of the system is reduced and the communication rate in the overlapping region is reduced, i.e., the communication quality is deteriorated. When the satisfactory wireless quality is to be ensured, therefore, it is necessary to avoid setting excessive overlapping regions.

In addition, as shown in an area 108 included in the area 106, in a point at which the intensity of a pilot signal to be received by one of the adjacent wireless cells is reversed, in other words, in a region (handover region) located around the point at which the intensity of the pilot signal to be received from other wireless cells is higher than the intensity of the pilot signal to be received from the wireless cell currently connected, communication generally tends to be unstable because the mobile terminal performs a process (handover) of switching the wireless base station (connected to the mobile terminal) to another wireless base station to which the mobile terminal is to be connected. When numbers of mobile terminals are located in the handover region, there is a problem that the network may carry an excessive load attributable to the switching process. When the satisfactory wireless quality is to be ensured while the load to the network is suppressed, therefore, it is necessary that the handover region not overlap an area in which numbers of mobile terminals gather.

In order to ensure the satisfactory quality of communication in the mobile communication network system that provides a plurality of two-dimensionally partitioned wireless cells, it is important to ensure appropriate wireless coverage of each of the wireless cells. For this purpose, it is necessary to, in consideration of area characteristics (transmission characteristics of radio waves, a geographical distribution of mobile terminals and the like) of the wireless cells, set wireless parameters (transmission power, angles of antennas or the like) of the wireless base stations forming the wireless cells to appropriate values.

For a technique for determining a setting value of a wireless parameter related to area shape design (including design of combinations) of wireless cells, for example, Patent Document 1 describes a radio wave transmission simulator that has a function of correcting estimated results of actual measuring points, using data (including positional information obtained by a GPS) with wireless qualities measured in areas included in wireless cells, so as to cause the estimated results to be close to the measured results. In addition, Patent Document 1 describes a method for visualizing wireless coverage using the radio wave transmission simulator by overlapping the wireless coverage with a map. When this method is used, the designer in charge of wireless areas can determine the setting value of the wireless parameter on the basis of the difference between the transmission characteristics of the areas while visually confirming: the degree of overlapping of coverage of the adjacent wireless cells; the degree of overlapping of an area (such as a downtown area) in which a lot of mobile terminals exist with the handover region; and the like.

In addition, for example, Patent Document 2 describes a wireless base station device that determines a wireless parameter on the basis of the results of measurement of radio waves coming from base stations located around the wireless base station device. The wireless base station device described in Patent Document 2 detects the levels of carriers on the basis of received wireless signals, prioritizes a carrier with a high level, and collects information on stations located around another station. The wireless base station device creates a peripheral environment list for the other station indicated in the collected information on the basis of attribute information acquired on the basis of a signal received by the wireless base station device. The wireless base station device determines, on the basis of the peripheral environment list, a communication scheme to be used for wireless communication.

In addition, Non-Patent Document 1 describes a method for updating a setting value of a wireless parameter to be applied to a wireless base station using network-side operational information. In the method described in Non-Patent Document 1, information on wireless qualities (the amount of interference received from peripheral wireless cells) measured by mobile terminals is collected on the side of a network, and the setting value of the wireless parameter to be applied to the wireless base station is updated on the basis of the measured information collected and calculated on a wireless cell basis.

For example, when the amount of the interference received from the peripheral wireless cells is large, it is determined that an overlapping region is too large, and the setting value of the wireless parameter is changed, for example, transmission power of the base station is reduced or a tilt angle of an antenna is reduced. In contrast, when the amount of the interference received from the peripheral wireless cells is small, it is determined that the overlapping region is small, and the setting value of the wireless parameter is changed, for example, the transmission power of the base station is increased or the tilt angle of the antenna is increased.

Wireless qualities after the change are measured by the mobile terminals again, and the measured wireless qualities are fed back in order to change and set the wireless parameter. In the method described in Non-Patent Document 1, the setting value of the wireless parameter is determined on the basis of a geographical distribution of mobile terminals for each of areas and transmission characteristics for each of the areas by repeating the aforementioned process until the wireless quality of each of the cells reaches an appropriate level.

Citation List

Patent Literature

Patent Document 1: Japanese Patent No. 3862021.
Patent Document 2: JP-A-2008-118420

Non-Patent Literature

Non-Patent Document 1: Nokia, "Radio Network Planning and Optimisation for UMTS", John Wiley & Sons, 2002, p. 422 - p. 423

Summary of Invention

Technical Problem

However, when the radio wave simulator described in Patent Document 1 is used, actual measured information that includes information about the positions of the measuring points is necessary in order to improve the accuracy of estimating radio wave transmission. Thus, there is a problem that a lot of running tests need to be carried out and this is not efficient. Similar information can be collected from general mobile terminals instead of carrying out running tests using a dedicated measuring device. However, when the ratio of mobile terminals without a positioning function such as a GPS in a wireless cell is high, the accuracy of estimating transmission characteristics cannot be corrected. Thus, there is a problem that it is difficult to control local wireless cell coverage, such as coverage of an overlapping region in the wireless cell.

For the radio wave simulator described in Patent Document 1, a geographical distribution of actual mobile terminals is not taken into consideration. Thus, when a geographical distribution of mobile terminals, which is expected by a designer of wireless areas, is different from the actual geographical distribution, there is a problem that an area in which the wireless quality is low, and an area in which users are concentrated, overlap each other in wireless coverage.

In the method described in Non-Patent Document 1, the wireless parameter is changed on the basis of the information (on mobile terminals) collected and calculated on a wireless cell basis. Thus, there is a problem that it is difficult to control coverage of an entire wireless cell in consideration of each of requirements for design of local coverage between adjacent wireless cells.

In the method described in Non-Patent Document 1, the amount of change in the wireless parameter is determined for each of the wireless cells without consideration of an effect on mobile terminals existing in adjacent wireless cells. Thus, there is a problem that it is difficult to control the wireless cell coverage while an adverse effect on the adjacent wireless cells is suppressed.

In the method described in Patent Document 2, the wireless parameter (specifically, a frequency to be used) is determined on the basis of the measured information on the base stations. In the method described in Patent Document 2, when only the measured information on the base stations is used, a "wireless quality of an edge of a cell" controlled by the wireless base station device cannot be detected by the wireless base station device. Thus, coverage of the entire wireless cell cannot be controlled while the wireless quality of the edge of the cell is controlled.

Therefore, an object of the present invention is to provide a network management system, a wireless coverage control method and a wireless coverage control program, which enable wireless cell coverage to be controlled in consideration of an actual user distribution and each of requirements for design of local coverage between adjacent wireless cells so that an area in which the quality of communication is low does not overlap an area in which users are concentrated.

Solution to Problem

According to the present invention, a network management system controls coverage provided by a wireless cell formed in a mobile communication network, the system comprising:

wireless link quality information collection means for collecting, from a mobile terminal that is connected to the mobile communication network, wireless link quality information that indicates wireless link quality measured by the mobile terminal, the wireless link quality information containing information about quality of wireless links between the mobile terminal and two or more wireless cells;

coverage evaluation means for evaluating the wireless cell coverage on the basis of wireless link quality information calculated for each of the wireless cells using the wireless link quality information collected by the wireless link quality information collection means; and

wireless parameter calculation means for calculating an amount of change in changing for a wireless parameter of a wireless base station on the basis of the result of the evaluation provided by the coverage evaluation means.

According to the present invention, a wireless coverage control method for controlling coverage provided by a wireless cell formed in a mobile communication network, comprises the steps of:

collecting, from a mobile terminal that is connected to the mobile communication network, wireless link quality information that indicates wireless link quality measured by the mobile terminal, the wireless link quality information containing information about quality of wireless links between the mobile terminal and two or more wireless cells;

evaluating the wireless cell coverage on the basis of wireless link quality information calculated for each of the wireless cells using the collected wireless link quality information; and

calculating an amount of change for a wireless parameter of a wireless base station on the basis of the result of the evaluation.

According to the present invention, a wireless coverage control program used to control coverage provided by a wireless cell formed in a mobile communication network,

causes a computer, which has storage means for storing wireless link quality information that indicates wireless link quality collected by a mobile terminal that is connected to the mobile communication network and measured by the mobile terminal, the wireless link quality information containing information about quality of wireless links between the mobile terminal and two or more wireless cells, to perform the following:

a coverage evaluation process of evaluating the wireless cell coverage on the basis of wireless link quality information calculated for each of the wireless cells using the collected wireless link quality information; and
a wireless parameter calculation process of calculating an amount of change for a wireless parameter of a wireless base station on the basis of the result of the evaluation by the coverage evaluation process.

Advantageous Effects of Invention

According to the present invention, wireless cell coverage can be controlled in consideration of an actual user distribution and each of the requirements for design of local coverage between adjacent wireless cells so that an area in which the quality of communication is low does not overlap an area in which users are concentrated.

Brief Description of Drawings

[FIG. 1] It depicts a diagram illustrating an example of the configuration of a network management system according to a first embodiment.
[FIG. 2] It depicts a flowchart of an example of operations of the network management system 200, a wireless base station 201 and a mobile terminal 202, while the operations are related to a method for controlling wireless coverage.
[FIG. 3] It depicts a diagram illustrating an example of a distribution of wireless qualities between two wireless cells.
[FIG. 4] It depicts a flowchart of an example of an operation of evaluating the coverage.
[FIG. 5] It depicts a diagram illustrating an example of division of regions in the wireless quality distribution for evaluation of the coverage.
[FIG. 6] It depicts a diagram illustrating geographical regions of the wireless cells.
[FIG. 7] It depicts a diagram illustrating an example of forms of an evaluation function $Q_{jk}$.
[FIG. 8] It depicts a flowchart of an example of an operation of calculating a setting value of a wireless parameter (or the amount of change in the wireless parameter).
[FIG. 9] It depicts a block diagram illustrating an outline of the present invention.
[FIG. 10] It depicts a block diagram illustrating another example of the configuration of the network management system according to the present invention.
[FIG. 11] It depicts a diagram illustrating an example of the configuration of a mobile communication system.
[FIG. 12] It depicts a diagram illustrating an example of an arrangement of areas covered by wireless cells.

Description of Embodiment

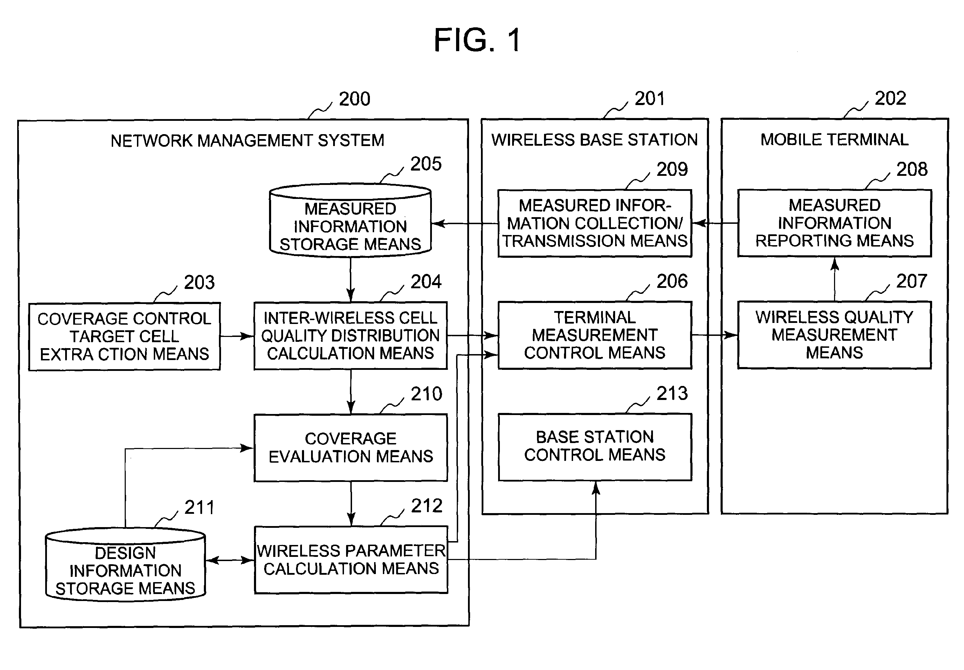

An embodiment of the present invention is described below with reference to the accompanying drawings. FIG. 1 is a diagram illustrating an example of the configuration of a network management system according to a first embodiment of the present invention. In the example illustrated in FIG. 1, examples of the configurations of a wireless base station 201 and a mobile terminal 202 are illustrated, as examples of a wireless base station and a mobile terminal which form a mobile communication network to be managed, in addition to that of a network management system 200. In FIG. 1, the wireless base station directly transmits and receives a control signal to and from a mobile communication core network (not illustrated), and the wireless base station and the mobile communication core network are managed by the network management system. The mobile communication network to which the invention can be applied is not limited to the above configuration. For example, the invention can be applied to a mobile communication network in which a base station control device and a base station management device are provided between the mobile communication core network and the wireless communication base station. In addition, the invention can be applied to a mobile communication network in which functions of the network management system are embedded in a base station control device or the wireless base station.

As illustrated in FIG. 1, the network management system 200 according to the present embodiment includes a coverage control target cell extraction means 203, an inter-wireless cell quality distribution calculation means 204, a measured information storage means 205, a coverage evaluation means 210, a design information storage means 211, and a wireless parameter calculation means 212.

The coverage control target cell extraction means 203 extracts, on the basis of statistics of communication qualities of the mobile communication network to be managed, a wireless cell whose coverage needs to be controlled. For example, the coverage control target cell extraction means 203 references communication quality statistics information that indicates the statistics of communication qualities calculated for each of wireless cells. Then, the coverage control target cell extraction means 203 extracts, as a cell to be controlled, a wireless cell determined to be a cell whose coverage needs to be controlled due to degradation of a wireless quality, from among wireless cells in which the failure rates of communication between mobile terminals and wireless base stations are high. Detailed examples of a failure of communication are a failure of establishment of a connection when a call starts in a wireless cell; an unusual disconnection during a call in a wireless cell; and a failure of handover when a mobile terminal moves from a certain wireless cell to another wireless cell that is adjacent to the certain wireless cell. For example, the number of times and the number of failures of these operations (a call, a disconnection during a call, handover and the like) performed for a certain period of time on a network side (connection control device and the like) are counted for each of wireless cells used for the operations. The counted numbers are held as communication quality information. The coverage control target cell extraction means 203 references the communication quality information to calculate the failure rate of communication for each of the wireless cells. The wireless cells that are used by the mobile terminals can be identified by reference of identifiers (cell IDs or the like) of the cells, the identifiers being included in control signals.

The extraction of wireless cells to be controlled is performed on the basis of not only the quality statistics but also arbitrary wireless cells specified by an administrator. For example, the administrator may specify, as the cell to be controlled, a wireless cell that covers a region where population density is relatively high. In addition, for example, the administrator may specify, as the cell to be controlled, a wireless cell that includes a region in which the wireless cell overlaps another wireless cell formed by a different base station at a current time. All wireless cells that exist at the current time can be specified as cells to be controlled.

The measured information storage means 205 stores measured information that is information indicating wireless qualities measured by the mobile terminal 202 connected to the mobile communication network to be managed. The measured information, for example, may be information of signal power or signal-to-interference ratios. The measured information is detected while being associated with the wireless cells. For example, when a mobile terminal 202 is located in an area where the mobile terminal 202 can receive a pilot signal from a wireless cell to which the mobile terminal 202 currently belongs, and also from a wireless cell adjacent thereto, the mobile terminal 202 generates, as the measured information, information that includes: a value of the power (reception power) of a pilot signal received (detected) from the wireless base station to which the mobile terminal 202 is currently connected; information of the base station to which the mobile terminal 202 is currently connected; information of a wireless cell managed by the base station to which the mobile terminal 202 is currently connected; a value of the power (reception power) of a pilot signal received (detected) from another base station that manages a wireless cell adjacent to the wireless cell to which the mobile terminal 202 belongs; information of the other base station that manages the adjacent wireless cell; and information of the adjacent wireless cell. Even when the mobile terminal 202 is located in an area where the mobile terminal 202 receives a pilot signal only from a single wireless cell, the mobile terminal 202 generates measured information that indicates that the mobile terminal 202 receives a pilot signal only from the single wireless cell. It is preferable that the measured information indicate wireless qualities of two or more wireless cells measured by the mobile terminals 202. The information of a signal-to-interference ratio may be included in the measured information in addition to or instead of the signal power.

The inter-wireless cell quality distribution calculation means 204 acquires measured information of wireless qualities measured by mobile terminals that belongs to a wireless cell whose coverage is to be controlled or a wireless cell adjacent thereto. When the interested measured information is held by the measured information storage means 205, the inter-wireless cell quality distribution calculation means 204 acquires the interested measured information. When the interested measured information does not exist, the inter-wireless cell quality distribution calculation means 204 transmits a request for collection of the measured information to the wireless base station 201 that manages a wireless cell from which the measurement information needs to be acquired. Then, the inter-wireless cell quality distribution calculation means 204 causes the wireless base station 201 to perform a predetermined control sequence (measured information collection sequence), and then collects the measured information through the wireless base station 201 from the mobile terminal 202 that belongs to the interested wireless cell. The request (to be transmitted to the wireless base station 201) for collection of the measured information is hereinafter referred to as a "measurement request". The inter-wireless cell quality distribution calculation means 204 collects and calculates, on the basis of the collected measured information, the reception power of two or more wireless cells adjacent to each other for each of the terminals, and calculates a terminal distribution that indicates the magnitude relationship of the reception power between the wireless cells. In the present embodiment, the terminal distribution is called an inter-wireless cell wireless quality distribution.

The design information storage means 211 stores design information on wireless areas. The design information on the wireless areas is information on wireless communication performance of the mobile communication network, e.g., an arrangement of wireless base stations, setting values of wireless parameters and the like. Each of the wireless parameters is a detailed (real) setting item for a constituent element (wireless base station or the like) that is used to achieve the wireless communication performance of the mobile communication network. Examples of the wireless parameter of each of the wireless base stations are the total transmission power or a tilt angle of an antenna, which is necessary for the wireless base station to form the wireless cell.

The design information storage means 211 may store information of a coverage evaluation function that is used by the system. The coverage evaluation function is a function that is used to evaluate qualities of a plurality of wireless cells for coverage of the two or more wireless cells adjacent to each other on the basis of the terminal distribution (inter-wireless cell wireless quality distribution) that indicates the magnitude relationship of the reception power of the wireless cells that are adjacent to each other.

The coverage evaluation means 210 uses the predetermined coverage evaluation function to evaluate wireless cell coverage (determined to be controlled) on the basis of the inter-wireless cell wireless quality distribution collected and calculated by the inter-wireless cell quality distribution calculation means 204.

The wireless parameter calculation means 212 calculates a setting value of the wireless parameter for the wireless cell (whose coverage is to be controlled) on the basis of the result of the evaluation performed by the coverage evaluation means 210 and a current setting value of the wireless parameter of the wireless base station that forms the wireless cell to be evaluated (or controlled) in order to improve the quality of the coverage. The wireless parameter calculation means 212 may calculate the amount of change from a current value of the setting item held as the wireless parameter and thereby calculate a new setting value of the wireless parameter.

In addition, the wireless parameter calculation means 212 may store (update) the calculated setting value of the wireless parameter as the design information stored in the design information storage means 211. In addition, the wireless parameter calculation means 212 may transmit the changed setting value to the interested wireless base station 201 so that the changed setting value is reflected in the wireless base station 201 that manages the interested wireless cell. Then, the wireless parameter calculation means 212 may request the wireless base station 201 to change the setting value of the wireless parameter. In addition, the wireless parameter calculation means 212 may transmit the measurement request to the interested wireless base station 201 so that the wireless base station 201 causes the mobile terminal 202 to measure wireless quality after the change in the wireless parameter in a similar manner to the process performed by the inter-wireless cell quality distribution calculation means 204. When the measured information is collected through the wireless base station 201 from the mobile terminal 202 that belongs to the wireless cell related to the change in the parameter, the wireless parameter calculation means 212 causes the coverage evaluation means 210 to evaluate the wireless cell coverage using the measured information. Control (coordination control) that is related to the operation of reflecting the setting and the re-evaluation may be performed by the coverage evaluation means 210 that has received a notification indicative of the setting value of the wireless parameter from the wireless parameter calculation means 212.

Referring to FIG. 1, the wireless base station 201 according to the present embodiment includes a terminal measurement control means 206, a measured information collection/transmission means 209 and a base station control means 213.

When the terminal measurement control means 206 receives the measurement request from the network management system 200, the terminal measurement control means 206 instructs the mobile terminal 200 belonging to the wireless cell specified as a cell whose wireless quality is to be measured to measure wireless quality. For example, the terminal measurement control means 206 may use a downlink control connection used in the interested wireless cell to transmit requests for measurement of the wireless quality to the mobile terminal 202 belonging to the wireless cell, and thereby instruct the mobile terminals 202 to measure the wireless quality.

The measured information collection/transmission means 209 collects the measured information on the wireless quality that has been transmitted from the mobile terminal 202, and then transmits the measured information to the network management system 200. In this case, the measured information collection/transmission means 209 may transmit the measured information to the network management system 200 as a request for access to the measured information storage means 205 so that the measured information is stored in the measured information storage means 205 of the network management system 200. The measured information can be stored in the measured information storage means 205 by the inter-wireless cell quality distribution calculation means 204 of the network management system 200 that has received the measured information.

The base station control means 213 receives a request for a change in the wireless parameter from the network management system 200 and performs control to change a detail of the wireless parameter (setting item related to the wireless communication performance) in the wireless base station 201 (wireless base station 201 provided with the base station control means 213) to a specified value.

Referring to FIG. 1, the mobile terminal 202 according to the present embodiment includes a wireless quality measurement means 207 and a measured information reporting means 208.

When the wireless quality measurement means 207 receives a request for measurement of wireless quality from the wireless base station 201 to which the wireless quality measurement means 207 is connected, the wireless quality measurement means 207 measures a wireless quality (for example, the power of a pilot signal, the signal-to-interference ratio, or the like) of a wireless cell (hereinafter referred to as "belonging wireless cell") to which the mobile terminal 202 belongs and a wireless quality of a wireless cell that is adjacent to the belonging wireless cell.

The measured information reporting means 208 reports information (i.e., measured information) of the wireless quality measured by the wireless quality measurement means 207 to the base station 201. The measured information reporting means 208 may transmit the information of the measured wireless quality using an upstream control connection used in the belonging wireless cell and thereby report the measured information.

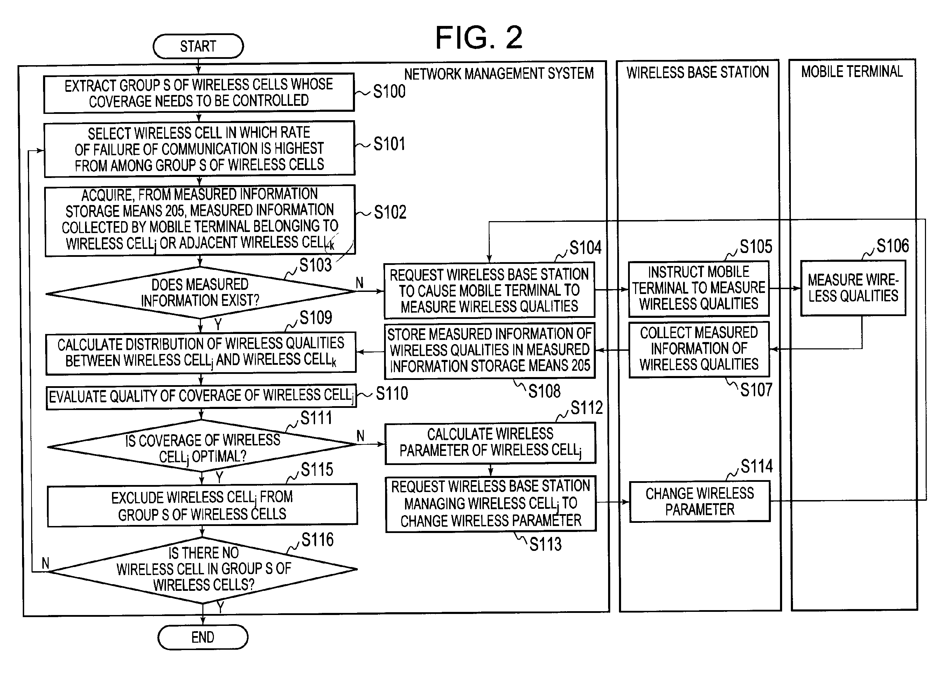

Next, operations of the network management system 200 according to the present embodiment are described. FIG. 2 is a flowchart of an example of operations (related to the wireless coverage control method to be performed by the network management system 200 according to the present embodiment) of the network management system 200, the wireless base station 201 and the mobile terminal 202.

As illustrated in FIG. 2, the coverage control target cell extraction means 203 first extracts wireless cells whose coverage is to be controlled from among wireless cells (specifically, wireless cells formed by the wireless base station 201 belonging to the network management system 200) belonging to the network management system 200 (in step S100). For example, the coverage control target cell extraction means 203 extracts, on the basis of statistics of communication quality in the mobile communication network to be managed, the wireless cells whose coverage needs to be controlled. Next, the coverage control target cell extraction means 203 selects a wireless cell in which the failure rate of communication is the highest from among the wireless cells extracted as cells whose coverage is to be controlled (in step S101). The wireless cell selected in step S101 is represented by a wireless cell to be processed or a wireless $\text{cell}_j$. In addition, a wireless cell that is adjacent to the wireless cell to be processed (wireless $\text{cell}_j$) is represented by an adjacent wireless cell or a wireless $\text{cell}_k$.

When the wireless cell to be processed is determined, the inter-wireless cell quality distribution calculation means 204 acquires, from the measured information storage means 205, the measured information collected by the mobile terminal that belongs to the wireless cell to be processed (wireless $\text{cell}_j$) or the adjacent wireless cell (wireless $\text{cell}_k$) (in step S102). In this case, when the necessary measured information does not exist in the measured information storage means 205 (No in step S103), the inter-wireless cell quality distribution calculation means 204 transmits the request for measurement of the wireless quality to the wireless base station 201 that manages the wireless cell from which the measured information needs to be collected (in step S104). The necessary measured information is the measured information collected from the mobile terminal belonging to the wireless cell to be processed or the adjacent wireless cell. For example, the necessary measured information may be measured information collected by a predetermined number or more of mobile terminals. The inter-wireless cell quality distribution calculation means 204 may transmit, as the request for measurement of the wireless quality, information that indicates the measurement request of the wireless quality and includes the identifier of the wireless cell (wireless $\text{cell}_j$ or wireless $\text{cell}_k$) to be measured.

In the wireless base station 201 that has received the measurement request of the wireless quality from the network management system 200, the terminal measurement control means 206 uses the wireless cell to be measured according to the instruction and instructs the mobile terminal 202 belonging to the wireless cell to measure the wireless quality (in step S105).

In the mobile terminal 202 that has received the instruction of measurement of the wireless quality from the wireless base station 201, the wireless quality measurement means 207 measures wireless quality of the belonging wireless cell and wireless quality of the wireless cell adjacent to the belonging wireless cell and reports the results of the measurement to the wireless base station 201 (in step S106).

The measured information collection/transmission means 209 of the wireless base station 201 collects the measured information of the wireless quality transmitted from the mobile terminal 202 (in step S107) and transmits the collected measured information to the network management system 200 so that the measured information is stored in the measured information storage means 205 of the network management system 200. The network management system 200 receives the measured information transmitted from the wireless base station 201 and stores the measured information in the measured information storage means 205 (in step S108).

When the necessary measured information exists in the measured information storage means 205 (Yes in step S103), or when the measured information collected from the mobile terminal 202 is stored in the measured information storage means 205 as a result of the measurement request transmitted to the wireless base station 201, the inter-wireless cell quality distribution calculation means 204 of the network management system 200 acquires the information (measured information) on the wireless quality of the wireless cell to be processed (wireless $\text{cell}_j$) or the wireless quality of the adjacent wireless cell (wireless $\text{cell}_k$) from the measured information storage means 205, and calculates a distribution of the wireless quality between the wireless $\text{cell}_j$ and the wireless $\text{cell}_k$ (in step S109).

In order to make understanding easy, the following case is described. In the case, when a plurality of wireless $\text{cells}_k$ exist, the inter-wireless cell quality distribution calculation means 204 calculates a wireless quality distribution between

the wireless cell$_j$ and each of the wireless cells$_k$. Furthermore, a wireless quality distribution may be calculated for each of combinations of three or more wireless cells that include the wireless cell$_j$ and the plurality of wireless cells$_k$ in addition to such a case in which a wireless quality distribution is calculated for each of combinations of two wireless cells. When the wireless quality distributions are calculated by the latter method, a function that returns an evaluation value of the quality of wireless cell$_j$ coverage is used for each of the combinations of the wireless quality of the three or more wireless cells as a coverage evaluation function ($Q_{jk}$) to be described later.

Next, the coverage evaluation means 210 acquires the wireless quality distribution calculated by the inter-wireless cell quality distribution calculation means 204, combines the acquired wireless quality distribution with the coverage evaluation function acquired from the design information storage means 211, and evaluates the quality of the wireless cell coverage to be processed (in step S110). The evaluation method using the coverage evaluation function is to be described later. The coverage evaluation means 210 determines, on the basis of the result of the evaluation using the coverage evaluation function, whether or not the wireless cell coverage to be processed is optimal (in step S111). Whether or not the wireless cell coverage to be processed is optimal is determined, on the basis of the evaluation result, depending on whether or not the coverage satisfies a predetermined quality.

When the coverage evaluation means 210 determines that the coverage is not optimal (No in step S111), the wireless parameter calculation means 212 calculates a setting value of the wireless parameter for the wireless cell to be processed in order to improve the quality of the coverage (in step S112). A method for calculating the setting value of the wireless parameter is to be described later. Then, the wireless parameter calculation means 212 requests the wireless base station 201 (managing the wireless cell to be processed) to change the wireless parameter (in step S113).

In the wireless base station 201 that has received the request for the change in the wireless parameter from the network management system 200, the base station control means 213 changes the wireless parameter in the wireless base station 201 (in step S114).

In addition, when the wireless parameter calculation means 212 completes a process of requesting the wireless base station 201 to change the wireless parameter, the wireless parameter calculation means 212 requests the wireless base station 201 to cause the mobile terminal 202 to measure wireless quality after the change in the wireless parameter. Subsequently, steps S104 to S111 are repeated.

The inter-wireless cell quality distribution calculation means 204 collects the measured information and calculates a wireless quality distribution on the basis of the collected measured information. Then, the coverage evaluation means 210 evaluates the quality of the wireless coverage after the change in the wireless parameter on the basis of the calculated wireless quality distribution. When the coverage satisfies the predetermined quality due to the change in the wireless parameter, the coverage evaluation means 210 determines that the wireless cell coverage to be processed is optimal.

In step S111 after the change in the wireless parameter, when the coverage does not satisfy the predetermined quality (or when the coverage evaluation means 210 determines that the wireless cell coverage to be processed is not optimal), the operations (steps S112 to S114) of calculating and changing the wireless parameter are performed again. The wireless parameter is repeatedly changed until the coverage satisfies the predetermined quality, a cumulative amount of changes of the wireless parameter exceeds a predetermined threshold, or the number of changes of the wireless parameter reaches a predetermined number. When the cumulative amount of changes of the wireless parameter exceeds the predetermined threshold or when the number of changes of the wireless parameter reaches the predetermined number, the fact that the control fails is displayed, and the wireless cell to be processed is excluded from the cells whose coverage is to be controlled.

When the coverage evaluation means 210 determines that the coverage is optimal (Yes in step S111), the wireless cell to be processed is excluded from the cells whose coverage is to be controlled (in step S115). For example, the coverage evaluation means 210 excludes the wireless cell to be processed from a group of the wireless cells extracted as the cells whose coverage is to be controlled in step S100.

The operations of steps S101 to S116 are repeated until a wireless cell whose coverage is to be controlled does not exist (No in step S116). When a wireless cell whose coverage is to be controlled does not exist, the coverage control process that is performed by the network management system 200 is terminated (Yes in step S116).

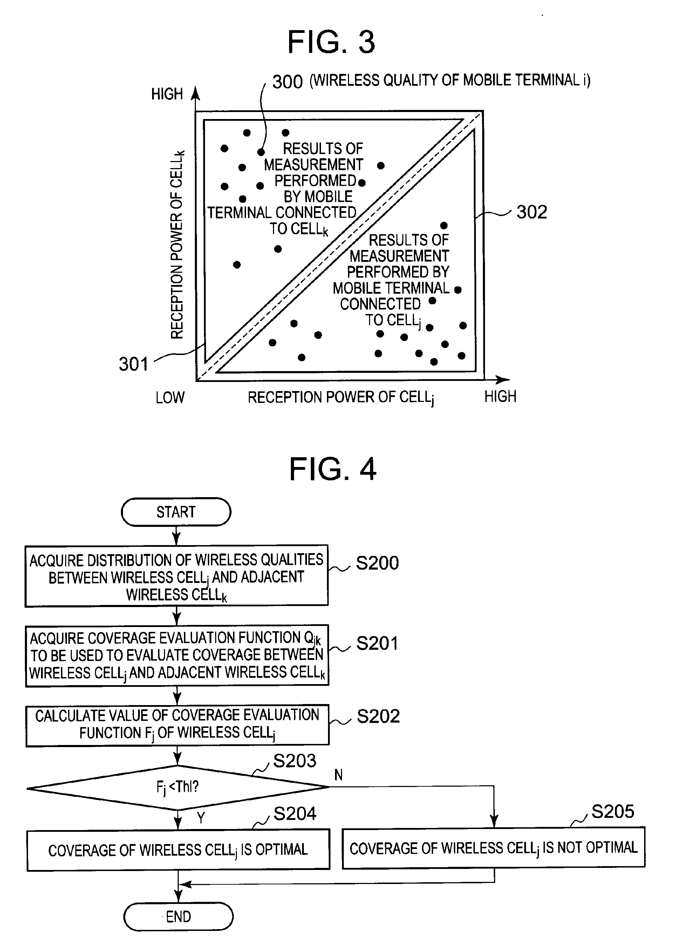

Next, a method for generating a wireless quality distribution between the wireless cells is described. The method is performed in step S109. FIG. 3 is a diagram illustrating an example of the wireless quality distribution between the two wireless cells according to the present embodiment. In the present embodiment, as illustrated in FIG. 3, the wireless quality distribution is a terminal distribution of the magnitude relationship of the power of pilot signals received by the mobile terminals (mobile terminals i) in both wireless cells (wireless cell$_j$ whose coverage is to be controlled and adjacent wireless cell$_k$), the mobile terminals belong to either the wireless cell$_j$ or the adjacent wireless cell$_k$.

For example, the following information is plotted (or drawn on a graph) in a region 302: information that is measured by mobile terminals which receive pilot signals with the highest intensity from the wireless cell$_j$ and receive pilot signals from the wireless cell$_j$ and the wireless cell$_k$ or by mobile terminals receiving pilot signals only from the wireless cell$_j$. It can be said that the mobile terminals receiving pilot signals belong to the wireless cell$_j$. In this case, plots of the information measured by the mobile terminals that receive the pilot signals from the wireless cell$_k$ are classified according to the order of the intensities of the pilot signals received from the wireless cell$_k$, and managed (maintained).

In addition, for example, the following information is plotted (or drawn on a graph) in a region 301: information that is measured by mobile terminals which receive pilot signals with the highest intensity from the wireless cell$_k$ and receive pilot signals from the wireless cell$_j$ and the wireless cell$_k$ or by mobile terminals receiving pilot signals only from the wireless cell$_k$. It can be said that the mobile terminals receiving pilot signals belong to the wireless cell$_k$.

A mobile terminal that aforementioned order of the intensities is lower than a predetermined threshold may be excluded from terminals to be plotted. In other words, the mobile terminal may be excluded from a group of mobile terminals for which a coverage evaluation function is used. For example, the inter-wireless cell quality distribution calculation means 204 may generate, as information indicative of the wireless quality distribution between the wireless cells, information indicating the plot positions of the mobile terminals belonging to the wireless cell$_j$ in the region 302 and information indicating the plot positions of the mobile terminals belonging to the wireless cell$_k$ in the region 301.

Next, the coverage evaluation method that is performed in step S110 is described. FIG. 4 is a flowchart of an example of operations of evaluating the coverage according to the present embodiment. The operations are performed by the coverage evaluation means 210. In the example illustrated in FIG. 4, the coverage evaluation means 210 first acquires information that indicates the wireless quality distribution (calculated by the inter-wireless cell quality distribution calculation means 204) between the wireless cell$_j$ and the wireless cell$_k$ (in step S200). In addition, the coverage evaluation means 210 acquires, from the design information storage means 211, the coverage evaluation function ($Q_{jk}$) to be used to evaluate coverage between the wireless cell (wireless cell$_j$) whose coverage is to be controlled and the adjacent wireless cell (wireless cell$_k$) (in step S201).

Next, the coverage evaluation means 210 calculates an evaluation value of the quality of the wireless cell$_j$ coverage using a coverage evaluation function $F_j$ (of the wireless cell$_j$) obtained by combining the wireless quality distribution information acquired in step S200 with the coverage evaluation function $Q_{jk}$ acquired in step S201 (in step S202). When the quality of the wireless cell$_j$ coverage is satisfactory, the evaluation function $F_j$ returns a small value. When the quality of the wireless cell$_j$ coverage is not satisfactory, the evaluation function $F_j$ returns a large value.

Next, the coverage evaluation means 210 determines the state of the wireless cell$_j$ coverage according to the evaluation value of the coverage quality calculated in step S202 (in step S203). When the value of the evaluation function $F_j$ is smaller than a predetermined threshold (Th1), the coverage evaluation means 210 determines that the wireless cell$_j$ coverage is optimal compared to the peripheral adjacent wireless cell$_k$ (in step S204). In contrast, when the value of the evaluation function $F_j$ is equal to or larger than the predetermined threshold (Th1), the coverage evaluation means 210 determines that the wireless cell$_j$ coverage is not optimal compared to the peripheral adjacent wireless cell$_k$ (in step S205).

The value of the evaluation function $F_j$ is determined on the basis of the degree of overlapping of the wireless cell$_j$ coverage with the wireless cell$_k$ coverage and the terminal distribution that varies depending on a geographical distribution of the mobile terminals and indicates the magnitude relationship of the reception power of the pilot signals. An example of the evaluation function $F_j$ is expressed by the following Equation (1).

$$F_j = \frac{1}{N_j}\sum_{k\in A}\sum_{n=1}^{N}\left\{\frac{\beta_{jk}^{(n)}}{M_{jk}^{(n)}}\sum_{i\in U_{jk}^{(n)}}Q_{jk}\left(r_{ij},r_{ik}\right)+\frac{\beta_{kj}^{(n)}}{M_{kj}^{(n)}}\sum_{i\in U_{kj}^{(n)}}Q_{kj}(r_{ik},r_{ij})\right\}+\frac{\beta_j}{M_j}\sum_{i\in U_j}Q_j(r_{ij})$$

```
Equation (1)
```

In Equation (1), a symbol $r_{ij}$ is the power of the pilot signals received by the mobile terminals i from the wireless cell$_j$. A symbol $Q_{jk}$ is an evaluation function for a region that is included in the wireless cell$_j$ coverage and overlaps the wireless cell$_k$ coverage. A symbol $Q_j$ is an evaluation function for a region that is included in the wireless cell$_j$ coverage and isolated from other wireless cells because no wireless cell exists around the region. A symbol $A_j$ is a group of wireless cells that are adjacent to the wireless cell$_j$. A symbol $U_{jk}^{(n)}$ is a group of mobile terminals that receive pilot signals with the n-th highest intensity from the wireless cell$_k$ and are among the mobile terminals that receive the pilot signals with the highest intensity from the wireless cell$_j$. A symbol $M_{jk}^{(n)}$ is the number of elements of the group $U_{jk}^{(n)}$. A symbol $N_j$ is the number of elements of the group $A_j$. A symbol $N$ is a constant number that indicates a lower limit of ordered intensities of pilot signals to be evaluated. Symbols $\beta_{jk}^{(n)}$, $\beta_j$ are constant numbers for weighting.

When a value of $\beta_{jk}^{(n)}$ is set such that the following Equation (2) is established, the wireless cell$_j$ coverage can be evaluated while a wireless quality of a mobile terminal that is actually highly likely to perform handover from the

wireless cell$_j$ to the adjacent wireless cell$_k$ is focused.

$$\beta_{jk}^{(1)} > \beta_{jk}^{(2)} > \cdots > \beta_{jk}^{(n)} \qquad \text{Equation (2)}$$

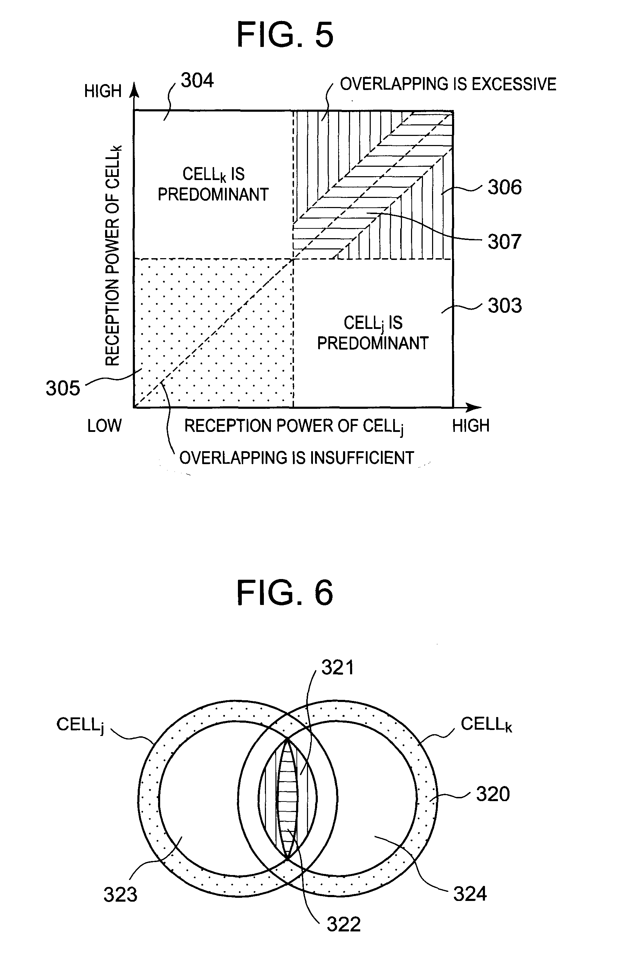

FIG. 5 is a diagram illustrating an example of division of regions in the wireless quality distribution for the evaluation of the coverage quality. As illustrated in FIG. 5, the coverage quality between the wireless cell$_j$ whose coverage is to be controlled and the wireless cell$_k$ may be evaluated as coverage quality of five regions (regions 303, 304, 305, 306 and 307) divided on the basis of the intensities (represented as the reception power of the cells in FIG. 5) of the signals received from the two wireless cells. A correspondence relationship between the five regions and the actual geographical regions of the wireless cells is illustrated in FIG. 6. FIG. 6 is a diagram illustrating the geographical regions of the wireless cells. The region 303 illustrated in FIG. 5 is a region in which the wireless cell$_j$ is predominant, and corresponds to a region 323 illustrated in FIG. 6. In addition, the region 304 illustrated in FIG. 5 is a region in which the wireless cell$_k$ is predominant, and corresponds to a region 324 illustrated in FIG. 6. The region 305 illustrated in FIG. 5 is a region in which the reception power of pilot signals in the wireless cell$_j$ and the reception power of pilot signals in the wireless cell$_j$ are low. The region 305 corresponds to a region 320 illustrated in FIG. 6. In the region 305 (or the region 323), overlapping is insufficient. The region 306 illustrated in FIG. 5 is a region in which the reception power of pilot signals in the wireless cell$_j$ and the reception power of pilot signals in the wireless cell$_j$ are high. The region 306 corresponds to a region 321 illustrated in FIG. 6. In the region 306 (or the region 321), overlapping is excessive. The region 307 illustrated in FIG. 5 is a region located around a point at which the magnitude relationship of the intensities of pilot signals is changed. The region 307 corresponds to a region 322 illustrated in FIG. 6. The region 307 (or the region 322) is a handover region.

For example, when measuring points of the wireless quality distribution (plot positions of the measured information on each mobile terminal) illustrated in FIG. 3 are concentrated in the region 303 or the region 304, it is apparent that interference by the adjacent cell is small and the wireless quality are stable. When measuring points of the wireless quality distribution illustrated in FIG. 3 are concentrated in the region 305, it is apparent that the overlapping is insufficient, and thereby an unusual communication disconnection easily occurs due to a dead area (area in which radio waves cannot be detected from the base stations). In addition, when measuring points of the wireless quality distribution illustrated in FIG. 3 are concentrated in the region 306, it is apparent that the overlapping is excessive, and thereby communication is degraded due to interference. In addition, when measuring points of the wireless quality distribution illustrated in FIG. 3 are concentrated in the region 307, it is apparent that a lot of mobile terminals are located in the handover region and the communication quality is unstable.

In this example, when the communication quality is satisfactory in the coverage between the wireless cell$_j$ and the adjacent wireless cell$_k$, the evaluation function $Q_{jk}$ returns a small value. As degradation of the communication is more likely to occur, the evaluation function $Q_{jk}$ returns a larger value. Specifically, the evaluation function $Q_{jk}$ that has the following characteristics is used. When wireless link quality of a single mobile terminal 202 in both wireless cells (the wireless cell$_j$ and the adjacent wireless cell$_k$ in this case) is low, the evaluation function $Q_{jk}$ returns a large value. When the wireless link quality of the single mobile terminal 202 in a plurality of wireless cells (the wireless cell$_j$ and the adjacent wireless cell$_k$ in this case) is close to each other, the evaluation function $Q_{jk}$ returns a large value. Values are defined by the evaluation function $Q_{jk}$ for the five regions so that the following requirements are satisfied.

1) The evaluation function $Q_{jk}$ returns a small value for the region 303 in which the wireless cell$_j$ is predominant and the region 304 in which the wireless cell$_k$ is predominant.
2) The evaluation function $Q_{jk}$ returns a large value for the region 305 in which the overlapping is insufficient, the region 306 in which the overlapping is excessive, and the handover region 307.
3) The evaluation function $Q_{jk}$ returns a larger value for the region 305 in which the overlapping is insufficient compared to the region 306 in which the overlapping is excessive.

The aforementioned requirement 3) is provided for the reason that a dead area that is caused by insufficiency of overlapping more largely affects a communication quality than interference caused by excess of overlapping.

An example of the evaluation function $Q_{jk}$ that satisfies the aforementioned requirements is expressed by the following Equation (3). In Equation (3), exp[x] means a natural logarithm base to the x-th power. In addition, symbols $a_{jk}$ and $b_{jk}$ are positive constant numbers.

$$Q_{jk}(r_{ij}, r_{ik}) = \exp\left[-a_{jk}(r_{ij}, r_{ik})^2 - b_{jk}(r_{ij}, r_{ik})^2\right] \qquad \text{Equation (3)}$$

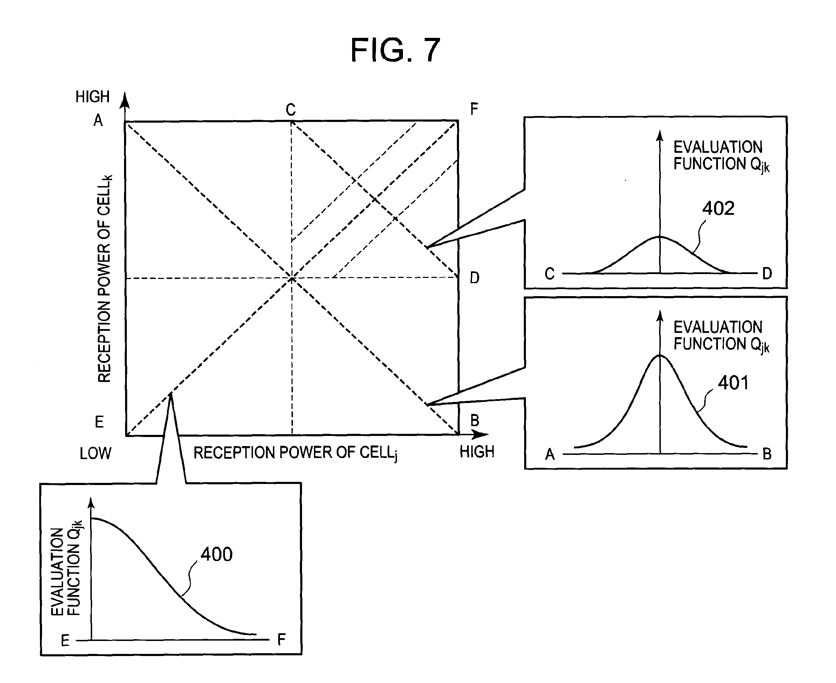

In addition, an example of forms of the evaluation function $Q_{jk}$ represented by Equation (2) is illustrated in FIG. 7. It is apparent that the requirements 1) and 2) are satisfied when a cut plane 401 of the evaluation function $Q_{jk}$ for a line A-B is viewed. In addition, it is apparent that the requirement 3) is satisfied when a cut plane 400 of the evaluation function $Q_{jk}$ for a line E-F is viewed.

An evaluation function $Q_j$ for a region that is included in the wireless cell$_j$ and isolated from other wireless cells because no wireless cell exists around the region can be expressed by the following Equation (4). It is sufficient if the evaluation function $Q_j$ has a characteristic in which as the reception power is larger, a value returned by the evaluation function $Q_j$ is smaller.

$$Q_j(r_{ij}) = \exp\left[-a_j * r_{ij}^2\right] \qquad \text{Equation (4)}$$

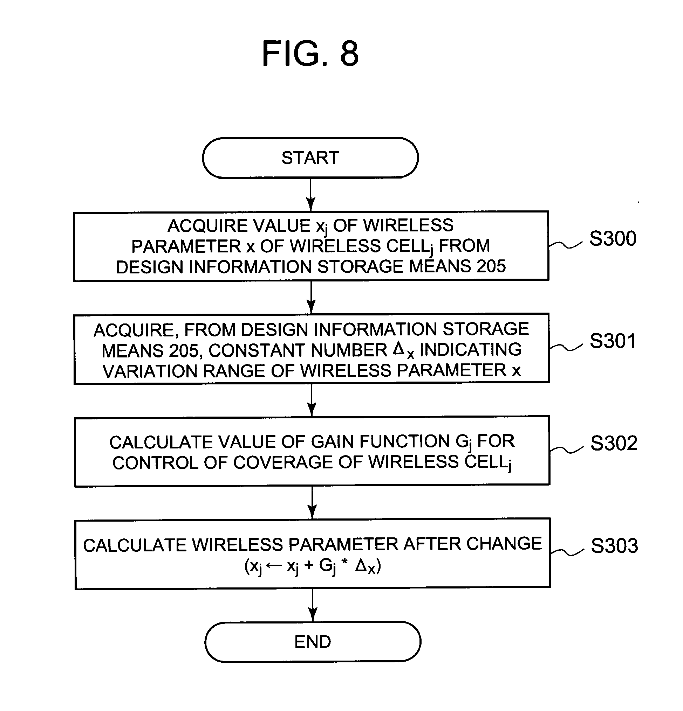

FIG. 8 is a flowchart of an example of an operation for calculating a setting value (or the amount of change) of the wireless parameter according to the present embodiment. This operation is performed by the wireless parameter calculation means 212. In the example illustrated in FIG. 8, the wireless parameter calculation means 212 first acquires, from the measured information storage means 205, a value $x_j$ of a wireless parameter $x$ to be controlled (specifically, a setting item $x$ that is included in the wireless parameters and related to the wireless cell$_j$) for the wireless cell$_j$ (in step S300). In addition, the wireless parameter calculation means 212 acquires, from the measured information storage means 205, a constant number $\Delta x$ that indicates a variation range of the wireless parameter $x$ (in step S301). Next, the wireless parameter calculation means 212 calculates a value of a gain function $G_j$ for control of coverage of the wireless cell$_j$ (in step S302). When it is necessary that the wireless parameter value $x_j$ be increased, the gain function $G_j$ for control of coverage returns a positive value. When it is necessary that the wireless parameter value $x_j$ be reduced, the gain function $G_j$ for control of coverage returns a negative value. Lastly, the wireless parameter calculation means 212 calculates the wireless parameter value $x_j$ after the change in accordance with the following Equation (5) (in step S303).

$$x_j = x_j + G_j * \Delta x \qquad \text{Equation (5)}$$

Examples of the wireless parameter are transmission power of the wireless base station and the tilt angle (meaning that when the amount of the change is positive, the tilt angle is increased) of the antenna. The value of the gain function $G_j$ is determined such that the wireless parameter value $x_j$ is changed to cause the measuring points distribution (wireless quality distribution) of the mobile terminals to move to a region (i.e., the region 303 or the region 304) that causes the coverage evaluation function for the wireless cell$_j$ and the adjacent wireless cell$_k$ therearound to return a small value. An example of the gain function $G_j$ is expressed by the following Equation (6). In Equation (6), sgn (x) is a code function and is defined according to the following Equation (7).

$$G_j = \frac{1}{N_j} \sum_{k \in A} \sum_{n=1}^{N} \left\{ \frac{\beta_{jk}^{(n)}}{M_{jk}^{(n)}} \sum_{i \in U_{jk}^{(n)}} \text{sgn}\left(\frac{\partial Q_{jk}(r_{ij}, r_{ik})}{\partial r_{ij}}\right) + \frac{\beta_{kj}^{(n)}}{M_{kj}^{(n)}} \sum_{i \in U_{kj}^{(n)}} \text{sgn}\left(\frac{\partial Q_{kj}(r_{ik}, r_{ij})}{\partial r_{ij}}\right) \right\} + \frac{\beta_j}{M_j} \sum_{i \in U_j} \text{sgn}\left(\frac{\partial Q_j(r_{ij})}{\partial r_{ij}}\right)$$

Equation (6)

$$\text{sgn}(x) = \begin{cases} 1...(x>0) \\ 0...(x=0) \\ -1...(x<0) \end{cases} \qquad \text{Equation (7)}$$

According to Equation (6), a control direction of the wireless parameter x is set such that a measuring point ($r_{ij}$, $r_{ik}$) or a measuring point ($r_{ik}$, $r_{ij}$) moves down along the gradient of the evaluation function. In addition, the control direction of the wireless parameter x for the entire wireless cell$_j$ is determined on the basis of the form of the evaluation function and the reception power distribution of the mobile terminals.

In Equation (6), the mobile terminals equally function to determine the method for controlling the wireless parameter x. However, when the following Equation (8) is used, a point that causes the value of the coverage evaluation function Q to be high, i.e., a measuring point of the mobile terminal for which the parameter needs to be changed, may be strongly reflected in a control direction of the entire wireless cell$_j$.

$$G_j = \frac{1}{N_j} \sum_{k \in A} \sum_{n=1}^{N} \left\{ \frac{\beta_{jk}^{(n)}}{M_{jk}^{(n)}} \sum_{i \in U_{jk}^{(n)}} \text{sgn}\left( \frac{\partial Q_{jk}(r_{ij}, r_{ik})}{\partial r_{ij}} \right) Q_{jk}(r_{ij}, r_{ik}) + \frac{\beta_{kj}^{(n)}}{M_{kj}^{(n)}} \sum_{i \in U_{kj}^{(n)}} \text{sgn}\left( \frac{\partial Q_{kj}(r_{ik}, r_{ij})}{\partial r_{ij}} \right) Q_{kj}(r_{ik}, r_{ij}) \right\}$$
$$+ \frac{\beta_j}{M_j} \sum_{i \in U_j} \text{sgn}\left( \frac{\partial Q_j(r_{ij})}{\partial r_{ij}} \right) Q_j(r_{ij})$$

Equation (8)

The flowchart illustrated in FIG. 2 indicates the example in which when the coverage evaluation means 210 determines that the wireless cell$_j$ coverage is not optimal in step S111, the wireless parameter of the wireless cell$_j$ is controlled. When the cumulative amount of changes in the wireless parameter of the wireless cell$_j$ reaches an upper limit or when the number of mobile terminals in the coverage reaches an upper limit of the capacity and the wireless cell$_j$ coverage cannot be increased in size, the wireless parameter of the wireless cell$_k$ that is adjacent to the wireless cell$_j$ is controlled, and thereby the coverage quality may be improved. In this case, a value $x_k$ of the wireless parameter of the wireless cell$_k$ after the change may be calculated according to the following Equation (9), for example.

$$x_k = x_k + G_k^j * \Delta x \qquad \text{Equation (9)}$$

Examples of a gain function $G_k^j$ in Equation (9) are expressed by the following Equations (10) and (11).

$$G_k^j = \frac{1}{N_j} \sum_{k \in A} \sum_{n=1}^{N} \left\{ \frac{\beta_{jk}^{(n)}}{M_{jk}^{(n)}} \sum_{i \in U_{jk}^{(n)}} \text{sgn}\left( \frac{\partial Q_{jk}(r_{ij}, r_{ik})}{\partial r_{ik}} \right) + \frac{\beta_{kj}^{(n)}}{M_{kj}^{(n)}} \sum_{i \in U_{kj}^{(n)}} \text{sgn}\left( \frac{\partial Q_{kj}(r_{ik}, r_{ij})}{\partial r_{ik}} \right) \right\}$$

Equation (10)

$$G_k^j = \frac{1}{N_j}\sum_{k\in A}\sum_{n=1}^{N}\left\{\frac{\beta_{jk}^{(n)}}{M_{jk}^{(n)}}\sum_{i\in U_{jk}^{(n)}}\mathrm{sgn}\left(\frac{\partial Q_{jk}(r_{ij},r_{ik})}{\partial r_{ik}}\right)Q_{jk}(r_{ij},r_{ik}) + \frac{\beta_{kj}^{(n)}}{M_{kj}^{(n)}}\sum_{i\in U_{kj}^{(n)}}\mathrm{sgn}\left(\frac{\partial Q_{kj}(r_{ik},r_{ij})}{\partial r_{ik}}\right)Q_{kj}(r_{ik},r_{ij})\right\}$$

```
Equation (11)
```

When the wireless parameter is changed according to Equations (5), (7) and (8) or Equations (9) to (11) and the overlapping is insufficient in the coverage, the transmission power of the wireless base station 201 or the tilt angle of the antenna is increased so that improvement control is performed to eliminate the insufficiency of the overlapping. In contrast, when the overlapping is excessive in the coverage or when a lot of mobile terminals are located in the handover region, the transmission power between the wireless cell$_j$ and the adjacent wireless cell$_k$ or the tilt angle of the antenna is increased or reduced so that improvement control is performed to eliminate the excess of the overlapping or remove the mobile terminals from the handover region. When the coverage is optimal, control is performed such that the wireless parameter is maintained at a current level without change. In this case, the control may not be performed.

In addition, the degree of the overlapping region between the wireless cells adjacent to each other may be changed on the basis of a geographical condition. For example, it is generally known that when the overlapping region between the wireless cells overlaps a main street, the overlapping region needs to be relatively large. For the wireless cells under such a condition, a coefficient $a_{jk}$ used in Equation (3) is set to a large value so that the function value for the overlapping region is reduced, and whereby the wireless parameter can be changed such that the large overlapping region is secured.

As described above, according to the present embodiment, the configuration is used to determine the amount (or the setting value of the wireless parameter) of change in the wireless parameter for controlling the coverage on the basis of the measured information of the wireless quality collected from the mobile terminals 202 actually located in the wireless cells. Thus, the coverage can be controlled in consideration of the actual user distribution such that an area in which the wireless quality is low among wireless areas does not overlap an area in which users are concentrated.

In addition, according to the present embodiment, the configuration is used to specify a mobile terminal, which is located in a region in which a certain wireless cell whose coverage is to be controlled overlaps another wireless cell adjacent to the certain wireless cell, on the basis of the magnitude relationship of the intensities of pilot signals received by the mobile terminal from the peripheral wireless cells. Thus, even if the mobile terminal is not provided with a positioning function, local coverage in the wireless cell can be controlled.

In addition, according to the present embodiment, the configuration is used to set an evaluation function for each of regions in which certain wireless cells whose coverage is to be controlled overlap wireless cells adjacent to the certain wireless cells, and to determine the amount (or setting value of the wireless parameter) of change in the wireless parameter to be used to control the coverage. Thus, the coverage can be controlled so as to be appropriate for the entire wireless cell by combining and evaluating the following requirements in consideration of requirements (for example, a requirement in which an overlapping region is relatively largely secured since the overlapping region includes a main street, and the like) for design of local regions in which the adjacent wireless cells overlap each other. The appropriate coverage of the entire wireless cell may be coverage in which satisfactory communication quality can be obtained in both an area that overlaps a wireless cell of a wireless base station A and an area that overlaps a wireless cell of a wireless base station B. The appropriate coverage of the entire wireless cell may be coverage in which the satisfactory communication quality can be obtained in the overlapping areas and that has an area in which the number of mobile terminals that can be covered matches the number of mobile terminals that can be covered in the coverage.

In addition, according to the present embodiment, the configuration is used to determine the amount of change in the wireless parameter on the basis of the distribution of the wireless quality of the mobile terminals located in the wireless cell that is adjacent to the wireless cell whose coverage is to be controlled. Thus, the wireless cell coverage whose coverage is to be controlled can be controlled while suppressing an adverse effect on the wireless cell adjacent thereto.

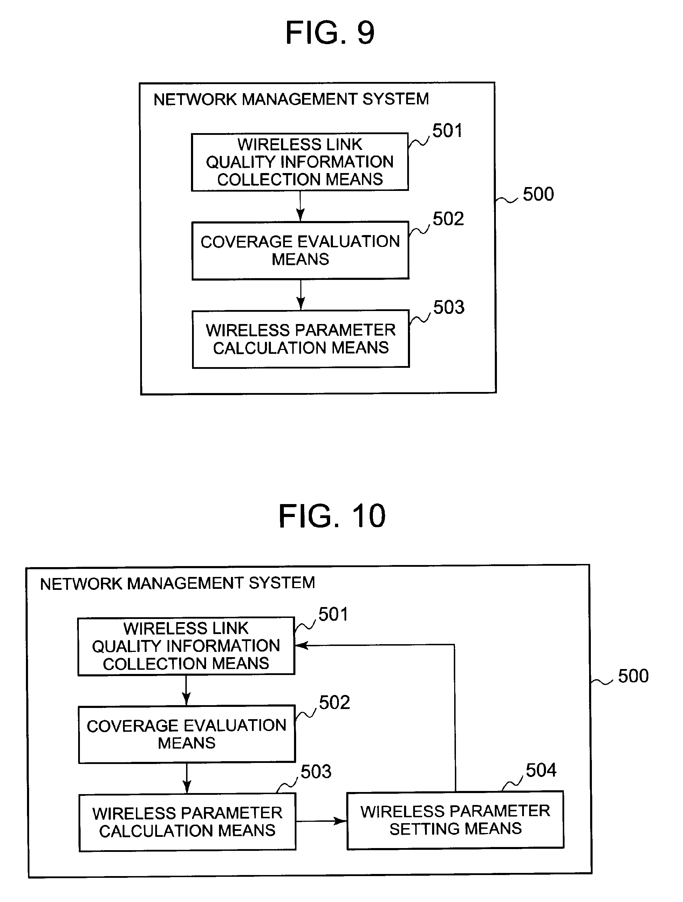

The outline of the present invention is described below. FIG. 9 is a block diagram illustrating the outline of the present invention. A network management system 500 illustrated in FIG. 9 includes a wireless link quality information collection means 501, a coverage evaluation means 502 and a wireless parameter calculation means 503.

The wireless link quality information collection means 501 (for example, the inter-wireless cell quality distribution calculation means 204) collects, from a mobile terminal that is connected to the mobile communication network, wireless link quality information that indicates wireless link quality measured by the mobile terminal, the wireless link quality information containing information about quality of wireless links between the mobile terminal and two or more wireless cells

The wireless link quality information collection means 501 may collect, as the wireless link quality information, information that includes at least one of signal power and a signal-to-interference ratio, which are related to the two or more wireless cells and have been measured by the mobile terminal, for example.

The coverage evaluation means 502 (for example, the coverage evaluation means 210) evaluates wireless cell coverage on the basis of wireless link quality information calculated for each of wireless cells using the wireless link quality information collected by the wireless link quality information collection means 501.

The coverage evaluation means 502 may evaluate coverage of a first wireless cell on the basis of a distribution of mobile terminals existent between the first wireless cell and a wireless cell adjacent to the first wireless cell, the distribution being indicated using the wireless link quality information calculated for each of the wireless cells, for example. In addition, the coverage evaluation means 502 evaluates wireless quality for mutual coverage between the plurality of wireless cells using a predetermined evaluation function, the predetermined evaluation function having characteristics to return a high value when the wireless link quality of the mobile terminal is low for any of the wireless cells and to return a high value when the wireless link quality of the mobile terminal is almost same for the plurality of wireless cells. In addition, the entire wireless cell coverage may be evaluated by using an evaluation function provided for each of combinations of the wireless cell managed by the wireless base station with wireless cells adjacent to the wireless cell and by combining the evaluation functions with each other.

The wireless parameter calculation means 503 (for example, the wireless parameter calculation means 212) calculates an amount of change in changing for a wireless parameter of a wireless base station on the basis of the result of the evaluation provided by the coverage evaluation means 502.

The wireless parameter calculation means 503 may calculate, as the amount of change in changing for the wireless parameter, the amount of change for at least one of total transmission power of the wireless base station and a tilt angle of an antenna of the wireless base station, for example. In addition, the wireless parameter calculation means 503 may calculate the amount of change in changing for a wireless parameter of a wireless base station that manages the first wireless cell or the wireless cell adjacent to the first wireless cell is calculated on the basis of the result of the evaluation calculated by the coverage evaluation means 502.

In addition, the wireless parameter calculation means 503 may determine the amount of change in changing for the wireless parameter so that a value of the coverage evaluation function becomes small, for example. In addition, the wireless parameter calculation means 503 may determine the amount of change in changing for the wireless parameter in positive feedback or negative feedback manner using the amount of change in the coverage evaluation function relative to the amount of the change for the wireless parameter, for example.

FIG. 10 is a block diagram illustrating another example of the configuration of the network management system 500 according to the present invention. As illustrated in FIG. 10, the network management system 500 may further include a wireless parameter setting means 504.

The wireless parameter setting means 504 sets, in the wireless base station, a setting value after the change in the wireless parameter, the setting value being indicated by the amount of change in changing for the wireless parameter of the wireless base station, the amount of the change being calculated by the wireless parameter calculation means. In the aforementioned embodiment, the wireless parameter calculation means 212 also serves as the wireless parameter setting means 504.

The present invention is described above in connection with the embodiment and the examples. However, the present invention is not limited to the embodiment and the examples. The configurations and details of the present invention can be modified within the scope of the present invention so that the modifications can be understood by those skilled in the art.

The present application claims priority to Japanese Patent Application No. 2009-113642 filed on May 8, 2009, the entire disclosure of which is incorporated herein by reference.

Industrial Applicability

The present invention can be effectively applied to a communication system that uses a mobile communication network.

Reference Signs List

200 Network management system
201 Wireless base station
202 Mobile terminal
203 Coverage control target cell extraction means
204 Inter-wireless cell quality distribution calculation means

205 Measured information storage means
206 Terminal measurement control means
207 Wireless quality measurement means
208 Measured information reporting means
209 Measured information collection/transmission means
210 Coverage evaluation means
211 Design information storage means
212 Wireless parameter calculation means
213 Base station control means
500 Network management system
501 Wireless link quality information collection means
502 Coverage evaluation means
503 Wireless parameter change amount calculation means
504 Wireless parameter setting means

**Claims**

1. A network management system that controls coverage provided by a wireless cell formed in a mobile communication network, the system comprising:

   wireless link quality information collection means for collecting, from a mobile terminal that is connected to the mobile communication network, wireless link quality information that indicates wireless link quality measured by the mobile terminal, the wireless link quality information containing information about quality of wireless links between the mobile terminal and two or more wireless cells;
   coverage evaluation means for evaluating the wireless cell coverage on the basis of wireless link quality information calculated for each of the wireless cells using the wireless link quality information collected by the wireless link quality information collection means; and
   wireless parameter calculation means for calculating an amount of change in changing for a wireless parameter of a wireless base station on the basis of the result of the evaluation provided by the coverage evaluation means.

2. The network management system according to claim 1,
   wherein the wireless link quality information includes at least one of signal power and a signal-to-interference ratio which are related to the two or more wireless cells and measured by the mobile terminal.

3. The network management system according to claim 1 or 2,
   wherein the wireless parameter calculation means calculates, as the amount of change in changing for the wireless parameter, the amount of change for at least one of total transmission power of the wireless base station and a tilt angle of an antenna of the wireless base station.

4. The network management system according to any one of claims 1 to 3,
   wherein the coverage evaluation means evaluates coverage provided by a first wireless cell on the basis of distribution of mobile terminals existent between the first wireless cell and a wireless cell adjacent to the first wireless cell, the distribution being indicated using the wireless link quality information calculated for each of the wireless cells, and
   wherein the wireless parameter calculation means calculates, on the basis of the result of the evaluation performed by the coverage evaluation means, the amount of change in changing for a wireless parameter of a wireless base station that manages the first wireless cell or the wireless cell adjacent to the first wireless cell.

5. The network management system according to any one of claims 1 to 4,
   wherein the coverage evaluation means evaluates wireless quality for mutual coverage between the plurality of wireless cells using a predetermined evaluation function, the predetermined evaluation function having characteristics to return a high value when the wireless link quality of the mobile terminal is low for any of the wireless cells and to return a high value when the wireless link quality of the mobile terminal is almost same for the plurality of wireless cells.

6. The network management system according to any one of claims 1 to 5,
   wherein the coverage evaluation means uses an evaluation function provided for each of combinations of the wireless cell managed by the wireless base station with wireless cells adjacent to the wireless cell and evaluates the entire wireless cell coverage by combining the evaluation functions with each other.

7. The network management system according to claim 5 or 6,
wherein the wireless parameter calculation means determines the amount of change in changing for the wireless parameter so that a value of the coverage evaluation function becomes small.

8. The network management system according to any one of claims 5 to 7,
wherein the wireless parameter calculation means determines the amount of change in changing for the wireless parameter in positive feedback or negative feedback manner using the amount of change in the coverage evaluation function relative to the amount of the change for the wireless parameter.

9. The network management system according to any one of claims 1 to 8, further comprising wireless parameter setting means for setting, in the wireless base station, a setting value after the change in the wireless parameter, the setting value being indicated by the amount of change in changing for the wireless parameter of the wireless base station, the amount of the change being calculated by the wireless parameter calculation means.

10. A wireless coverage control method for controlling coverage provided by a wireless cell formed in a mobile communication network, the method comprising the steps of:

collecting, from a mobile terminal that is connected to the mobile communication network, wireless link quality information that indicates wireless link quality measured by the mobile terminal, the wireless link quality information containing information about quality of wireless links between the mobile terminal and two or more wireless cells;
evaluating the wireless cell coverage on the basis of wireless link quality information calculated for each of the wireless cells using the collected wireless link quality information; and
calculating an amount of change in changing for a wireless parameter of a wireless base station on the basis of the result of the evaluation.

11. The wireless coverage control method according to claim 10,
Wherein, in the evaluation of the wireless cell coverage, coverage provided by a first wireless cell is evaluated on the basis of distribution of mobile terminals existent between the first wireless cell and a wireless cell adjacent to the first wireless cell, the distribution being indicated using the wireless link quality information calculated for each of the wireless cells, and
wherein the amount of change in changing for a wireless parameter of a wireless base station that manages the first wireless cell or the wireless cell adjacent to the first wireless cell is calculated on the basis of the result of the evaluation.

12. The wireless coverage control method according to claim 10 or 11,
wherein, in the evaluation of the wireless cell coverage, wireless quality for mutual coverage between the plurality of wireless cells is evaluated using a predetermined evaluation function, the predetermined evaluation function having characteristics to return a high value when the wireless link quality of the mobile terminal is low for any of the wireless cells and to return a high value when the wireless link quality of the mobile terminal is almost same for the plurality of wireless cells.

13. The wireless coverage control method according to any one of claims 10 to 12,
wherein, in the evaluation of the wireless cell coverage, the entire wireless cell coverage is evaluated by using an evaluation function provided for each of combinations of the wireless cell managed by the wireless base station with wireless cells adjacent to the wireless cell and by combining the evaluation functions with each other.

14. The wireless coverage control method according to any one of claims 10 to 13,
wherein, in the evaluation of the wireless cell coverage, the entire wireless cell coverage is evaluated by using an evaluation function provided for each of combinations of the wireless cell managed by the wireless base station with wireless cells adjacent to the wireless cell and by combining the evaluation functions with each other.

15. A wireless coverage control program used to control coverage provided by a wireless cell formed in a mobile communication network,
the control program causing a computer, which has storage means for storing wireless link quality information that indicates wireless link quality collected by a mobile terminal that is connected to the mobile communication network and measured by the mobile terminal, the wireless link quality information containing information about quality of wireless links between the mobile terminal and two or more wireless cells, to perform the following:

a coverage evaluation process of evaluating the wireless cell coverage on the basis of wireless link quality information calculated for each of the wireless cells using the collected wireless link quality information; and a wireless parameter calculation process of calculating an amount of change in changing for a wireless parameter of a wireless base station on the basis of the result of the evaluation by the coverage evaluation process.

# FIG. 1

**202 MOBILE TERMINAL**

- 208 MEASURED INFORMATION REPORTING MEANS
- 207 WIRELESS QUALITY MEASUREMENT MEANS

**201 WIRELESS BASE STATION**

- 209 MEASURED INFORMATION COLLECTION/TRANSMISSION MEANS
- 206 TERMINAL MEASUREMENT CONTROL MEANS
- 213 BASE STATION CONTROL MEANS

**200 NETWORK MANAGEMENT SYSTEM**

- 205 MEASURED INFORMATION STORAGE MEANS
- 204 INTER-WIRELESS CELL QUALITY DISTRIBUTION CALCULATION MEANS
- 210 COVERAGE EVALUATION MEANS
- 212 WIRELESS PARAMETER CALCULATION MEANS
- 203 COVERAGE CONTROL TARGET CELL EXTRACTION MEANS
- 211 DESIGN INFORMATION STORAGE MEANS

# FIG. 2

START

**NETWORK MANAGEMENT SYSTEM**

EXTRACT GROUP S OF WIRELESS CELLS WHOSE COVERAGE NEEDS TO BE CONTROLLED — S100

SELECT WIRELESS CELL IN WHICH RATE OF FAILURE OF COMMUNICATION IS HIGHEST FROM AMONG GROUP S OF WIRELESS CELLS — S101

ACQUIRE, FROM MEASURED INFORMATION STORAGE MEANS 205, MEASURED INFORMATION COLLECTED BY MOBILE TERMINAL BELONGING TO WIRELESS CELL$_j$ OR ADJACENT WIRELESS CELL$_k$ — S102

S103 — DOES MEASURED INFORMATION EXIST? — N

S109 — CALCULATE DISTRIBUTION OF WIRELESS QUALITIES BETWEEN WIRELESS CELL$_j$ AND WIRELESS CELL$_k$

EVALUATE QUALITY OF COVERAGE OF WIRELESS CELL$_j$ — S110

S111 — IS COVERAGE OF WIRELESS CELL$_j$ OPTIMAL? — N

S115 — EXCLUDE WIRELESS CELL$_j$ FROM GROUP S OF WIRELESS CELLS

S116 — IS THERE NO WIRELESS CELL IN GROUP S OF WIRELESS CELLS? — N

END

S104 — REQUEST WIRELESS BASE STATION TO CAUSE MOBILE TERMINAL TO MEASURE WIRELESS QUALITIES

STORE MEASURED INFORMATION OF WIRELESS QUALITIES IN MEASURED INFORMATION STORAGE MEANS 205 — S108

S112 — CALCULATE WIRELESS PARAMETER OF WIRELESS CELL$_j$

REQUEST WIRELESS BASE STATION MANAGING WIRELESS CELL$_j$ TO CHANGE WIRELESS PARAMETER — S113

**WIRELESS BASE STATION**

S105 — INSTRUCT MOBILE TERMINAL TO MEASURE WIRELESS QUALITIES

COLLECT MEASURED INFORMATION OF WIRELESS QUALITIES — S107

S114 — CHANGE WIRELESS PARAMETER

**MOBILE TERMINAL**

S106 — MEASURE WIRELESS QUALITIES

EP 2 429 228 A1

# FIG. 3

300 (WIRELESS QUALITY OF MOBILE TERMINAL i)

HIGH

RECEPTION POWER OF CELL$_k$

RESULTS OF MEASUREMENT PERFORMED BY MOBILE TERMINAL CONNECTED TO CELL$_k$

302

RESULTS OF MEASUREMENT PERFORMED BY MOBILE TERMINAL CONNECTED TO CELL$_j$

301

LOW          RECEPTION POWER OF CELL$_j$          HIGH

# FIG. 4

START

ACQUIRE DISTRIBUTION OF WIRELESS QUALITIES BETWEEN WIRELESS CELL$_j$ AND ADJACENT WIRELESS CELL$_k$ — S200

ACQUIRE COVERAGE EVALUATION FUNCTION Q$_{jk}$ TO BE USED TO EVALUATE COVERAGE BETWEEN WIRELESS CELL$_j$ AND ADJACENT WIRELESS CELL$_k$ — S201

CALCULATE VALUE OF COVERAGE EVALUATION FUNCTION F$_j$ OF WIRELESS CELL$_j$ — S202

S203

F$_j$ <Thl?

N

Y — S204

COVERAGE OF WIRELESS CELL$_j$ IS OPTIMAL

S205

COVERAGE OF WIRELESS CELL$_j$ IS NOT OPTIMAL

END

# FIG. 5

# FIG. 6

FIG. 7

# FIG. 8

```
                    ┌──────────────┐
                    │    START     │
                    └──────────────┘
                           │
                           ▼
┌─────────────────────────────────────────────┐
│        ACQUIRE VALUE x_j OF WIRELESS         │
│     PARAMETER x OF WIRELESS CELL_j FROM      │──── S300
│   DESIGN INFORMATION STORAGE MEANS 205       │
└─────────────────────────────────────────────┘
                           │
                           ▼
┌─────────────────────────────────────────────┐
│  ACQUIRE, FROM DESIGN INFORMATION STORAGE    │
│  MEANS 205, CONSTANT NUMBER Δ_x INDICATING   │──── S301
│   VARIATION RANGE OF WIRELESS PARAMETER x    │
└─────────────────────────────────────────────┘
                           │
                           ▼
┌─────────────────────────────────────────────┐
│  CALCULATE VALUE OF GAIN FUNCTION G_j FOR    │──── S302
│   CONTROL OF COVERAGE OF WIRELESS CELL_j     │
└─────────────────────────────────────────────┘
                           │
                           ▼
┌─────────────────────────────────────────────┐
│ CALCULATE WIRELESS PARAMETER AFTER CHANGE    │──── S303
│          (x_j ← x_j + G_j * Δ_x)             │
└─────────────────────────────────────────────┘
                           │
                           ▼
                    ┌──────────────┐
                    │     END      │
                    └──────────────┘
```

# FIG. 9

NETWORK MANAGEMENT SYSTEM

WIRELESS LINK
QUALITY INFORMATION
COLLECTION MEANS          501

COVERAGE EVALUATION
MEANS          502

WIRELESS PARAMETER
CALCULATION MEANS          503

500

# FIG. 10

NETWORK MANAGEMENT SYSTEM

WIRELESS LINK
QUALITY INFORMATION
COLLECTION MEANS          501

COVERAGE EVALUATION
MEANS          502

WIRELESS PARAMETER
CALCULATION MEANS          503

WIRELESS PARAMETER
SETTING MEANS          504

500

# FIG. 11

EXTERNAL NETWORK ~70

~47

MOBILE COMMUNICATION CORE NETWORK ~60

46

NETWORK MANA-GEMENT SYSTEM ~50

40  41  42  43  44  45

WIRELESS BASE STATION ~30

WIRELESS BASE STATION ~31

WIRELESS BASE STATION ~32

20  21  22  23  24

MOBILE TERMINAL ~10   11~ MOBILE TERMINAL

MOBILE TERMINAL ~12

MOBILE TERMINAL ~13   14~ MOBILE TERMINAL

80   81   82

EP 2 429 228 A1

# FIG. 12

100 : WIRELESS BASE STATION

103 : WIRELESS CELL

108 : HANDOVER REGION

105

106 : OVERLAPPING REGION
THAT IS TOO LARGE

104

102

101

107 : OVERLAPPING REGION THAT IS TOO SMALL

<table>
<tr><td colspan="2" align="center"><b>INTERNATIONAL SEARCH REPORT</b></td><td colspan="2">International application No.<br>PCT/JP2010/002713</td></tr>
</table>

| A. CLASSIFICATION OF SUBJECT MATTER |
|---|
| H04W16/02(2009.01)i, H04W16/24(2009.01)i, H04W24/10(2009.01)i, H04W52/24 (2009.01)i |

According to International Patent Classification (IPC) or to both national classification and IPC

| B. FIELDS SEARCHED |
|---|
| Minimum documentation searched (classification system followed by classification symbols)<br>H04W16/02, H04W16/24, H04W24/10, H04W52/24 |

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 2006-246032 A (NEC Corp.),<br>14 September 2006 (14.09.2006),<br>paragraph [0008]<br>(Family: none) | 1-3,9,10,15<br>4-8,11-14 |
| Y<br>A | JP 2008-252273 A (KDDI Corp.),<br>16 October 2008 (16.10.2008),<br>paragraphs [0037] to [0041]<br>& US 2009/0122739 A1 | 1-3,9,10,15<br>4-8,11-14 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08 July, 2010 (08.07.10) | Date of mailing of the international search report<br>20 July, 2010 (20.07.10) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3862021 B
- JP 2008118420 A

- JP 2009113642 A

**Non-patent literature cited in the description**

- **Nokia.** Radio Network Planning and Optimisation for UMTS. John Wiley & Sons, 2002, 422, 423